# EUROPEAN PATENT SPECIFICATION

(11) **EP 2 987 221 B1**
(45) Date of publication and mention of the grant of the patent: **11.09.2019**
(21) Application number: 14785461.6
(22) Date of filing: 11.04.2014
(51) Int. Cl.: H02J 7/00, H02J 1/00, H02J 13/00, H02J 1/08, H02M 3/04

(54) **ARRANGEMENT AND METHOD FOR VOLTAGE CONVERSION**
ANORDNUNG UND VERFAHREN ZUR SPANNUNGSUMWANDLUNG
AGENCEMENT ET PROCÉDÉ POUR LA CONVERSION DE TENSION

(30) Priority: 17.04.2013 SE 1350482
(43) Date of publication of application: 24.02.2016
(73) Proprietor: Seldén Mast AB, 421 77 Västra Frölunda (SE)
(72) Inventor: KARLSSON, Jan, S-421 58 Västra Frölunda (SE)
(74) Representative: Bergentall, Annika Maria
(86) International application number: PCT/SE2014/050450
(87) International publication number: WO 2014/171884

(56) References cited:
- EP-A1- 1 626 322
- EP-A1- 2 426 854
- WO-A2-2009/151388
- WO-A2-2012/062921
- SU-A1- 649 099
- US-A- 4 839 530
- US-A- 5 532 914
- US-A- 5 734 230
- US-A1- 2002 105 227
- US-A1- 2011 241 421
- US-A1- 2011 298 286
- US-B1- 6 268 716
- US-B1- 6 652 330

## Description

### TECHNICAL FIELD

The present invention relates to an arrangement for voltage conversion which comprises a voltage converter for conversion of a first voltage to a second, higher, voltage, wherein said first voltage is a DC-voltage which is provided by a low voltage source, for example a battery, and wherein said second voltage is intended for supplying a number of consumers. The arrangement for voltage conversion is via interconnecting means in communication with a number of consumers.

Patent documents US 2011/241421 A1, SU 649099 A1, US 6268716 B1, US 6652330 B1 disclose electric power distribution systems, also on vehicles, e.g. ships, with several loads being supplied through converters and managed e.g. based on their respective power demand.

### BACKGROUND

In for example motor driven leisure boats chargable 12 or 24 V batteries are today used to supply different consumers. The batteries are normally charged by means of the generator of the motor, but they can also be charged using mains-driven chargers or different generators or charging aggregates driven in an appropriate manner. Modern leisure boats may have many different current consumers, starter motors, electrically driven winches, anchor windlasses, jib furlers, furling masts, internal lighting, lantern, boat heater etc. It is of utmost importance that the battery is charged in order to avoid situations in which a consumer which is needed can not be used, not the least at sea. Measures have been taken and technical progress has been made as far as reducing the current consumption of different consumers is concerned, but on the supplying side there has not been any larger progress. Another important aspect is that the dimensioning of the cables is determined by the power output, i.e. to achieve a desired power output, thick cables may be needed, which is unpractical both from a cable drawing point of view and also since they are bulky, and such cables are also expensive. Particularly the available space on for example leisure boats is very limited. Another aspect is that, for reasons of security, for example due to fire hazards and risks for accidents, comparatively thick cables are used.

### SUMMARY OF THE INVENTION

It is therefore an object of the present invention to provide a solution to the above mentioned problems and through which the current supply in for example a leisure boat can be improved or optimized. A particular object is to provide an arrangement through which the consumption generally can be reduced, whereby batteries are not discharged as fast as hitherto and current is not consumed unnecessarily.

It is an urgent need to, in addition to reducing the current consumption of different consumers, also find solutions to make a charged battery last longer, so that the situation also on the supplying side, as far as current supply is concerned, can be improved. A general object of the invention is to provide an arrangement through which power supply on for example a leisure boat can be improved and facilitated, and which enables an optimal usage of available battery capacity. A particular object is to provide an arrangemenet through which current supply versus energy consumption can be optimized, and that charge losses to the highest possibly extent can be avoided. It is particularly an object of the invention to provide an arrangemenet through which security can be increased for example as far as fire hazard, the risk of electrical shocks associated with an electrical supply system, on for example leisure boats. Other objects are to provide a system which is easy to install, demands less space then hitherto known systems, which furthermore is easy to maintain and control, and flexible as far as installation and additions, replacement and removal respectively, of consumers is concerned, and which in addition thereto can be installed and run at a low cost.

Therefore an arrangemenet for voltage conversion as initially referred to is provided which comprises the characteristic features of the characterizing part of claim 1.

### BRIEF DESCRIPTION OF THE DRAWINGS

The invention will in the following be further described, in a non-limiting manner, and with reference to the accompanying drawings, in which:
- Fig. 1: shows a block diagram of a system for power supply comprising an arrangement for voltage conversion according to a first embodiment of the invention,
- Fig. 2: shows a block diagram of an arrangement according to an alternative embodiment of the invention,
- Fig. 3: shows still another alternative embodiment of an arrangement according to the invention with separate cables to each consumer,
- Fig. 4: shows still another embodiment of the invention wherein wireless communication is used,
- Fig. 5: is a flow diagram showing the procedure upon desired activation of a consumer, a request for a resource, according to a first embodiment of the invention,
- Fig. 6: is a flow diagram showing a procedure upon initiation of the activation of a consumer according to a second embodiment,
- Fig. 7: is a flow diagram describing a procedure upon the initiation of the activation of a consumer, request for a resource, according to a third embodiment.

### DETAILED DESCRIPTION

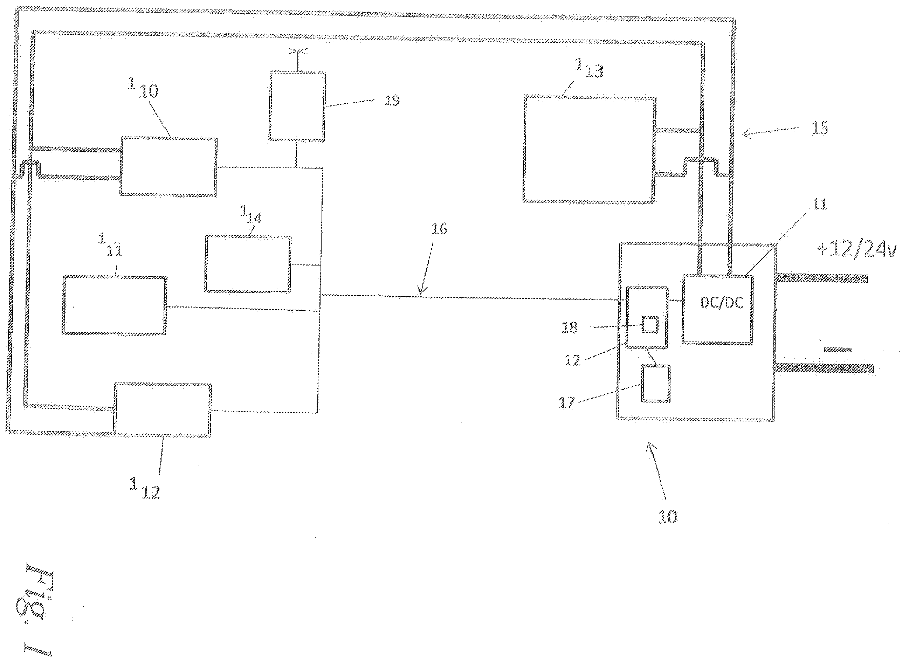

Fig. 1 shows a first embodiment of an arrangement for voltage conversion 10 according to the invention, which comprises a voltage converter 11, which for example may be connected to a battery delivering a first, lower voltage of between 10V and 30V, particularly a 12V or 24V battery. The voltage converter 11 comprised in the arrangement for voltage conversion is adapted to convert this first lower voltage, for example delivered from the battery, for example 12V or 24V, to a second, higher, voltage, for supplying a number of consumers with power.

The voltage converter 11 is a DC/DC converter and it is adapted to convert the first lower voltage to a second, higher DC voltage, which preferably does not exceed existing limits in force for being a high voltage, i.e. it is a low voltage, and, depending on applicable law, it may be somewhat below 50V or 60V, particulary 48V. In alternative embodiments the second voltage may of course be a high voltage, but then an adapted installation is reqired and more severe security requirements are applicable. In certain cases a more elaborate installation equipment etc. may be compensated for by e.g. enabling the usage of smaller motors, an increased admitted power output.

The arrangement for voltage conversion 10 comprises or is connected to a control function 12 controlling the voltage converter 11. Particularly it is adapted to be able to transfer the voltage converter between a first passive mode, which is an idle mode in which substantially no current is consumed, and an active mode in which one or more consumers can be supplied with power.

The control function 12 is adapted to be able to transfer the voltage converter from active to passive mode when/if given criteria are met, which for example may consist in no consumer having any outstanding request to be supplied or no consumer having consumed current during a given time period. There may of course also be other criteria, i.e. the essential being that the voltage converter only is in an active mode when power supply really is requested in order to save battery capacity and to make sure that no current is consumed unnecessarily, and to optimize the usage of available battery charge, particularly to avoid no charge losses.

The voltage converter can be woken up in different manners, for example by a user when a consumer is needed by means of a control button, a remote control or similar, or via, here, a CAN bus. If a CAN bus is not used for waking up (transferral to an active mode), a separate circuit can be used for this purpose.

Waking up particularly by means of a CAN bus can be done very quickly and only takes some, or a few, ms (milliseconds).

It is particularly advantageous if all information can be transferred by means of a CAN bus, with a CAN bus transfer a lot of, particularly all, information can be transferred using but one cable. This is also advantageous as such, since then only one cable is needed, which means that a lot of cabling can be avoided which is advantageous for several reasons, for cable drawing reasons, for reasons of cost, for reasons of space, and the risk of cable entanglement is avoided.

The arrangement for voltage conversion 10 as shown in Fig. 1 is connected to a number of consumers 1₁₀, 1₁₁, 1₁₂, 1₁₃ so that they can be supplied by means of a voltage converter 11. In the shown embodiment the interconnecting means comprises a, here denoted second, interconnecting network 15 for supply, provided between the voltage converter 11 and respective consumers comprising wires or cables.

Since the DC/DC converter 11 converts the lower battery voltage to a higher DC voltage, for example 48V, cables which are conciderably thinner than cables used in hitherto known arrangements can be used, for which it actually is the thickness of the cables which constitutes a problem, particularly when they are to be drawn in locations where the space is limited, as for example on a leisure boat. Thick cables are on one hand bulky and on the other hand they have to be bent, which may constitute a problem and make an appropriate drawing of the cables difficult. Such cables are also expensive, which is another drawback. With an arrangement for voltage conversion according to the invention, the required cable dimension be reduced from for example 40 mm² to about 8 mm².

Another advantage is that electrical motors become more efficient if a higher voltage is used, in particular embodiments without entering into the high voltage range, where totally different requirements on equipment and on security systems are applicable. As referred to above, the second voltage may of course alternatively be a high voltage.

The arrangement for voltage conversion 10 also comprises a, here called first, interconnecting network 16 for communication between the control unit 12 of the DC/DC converter and the consumers 1_{10,} 1₁₁, 1₁₂, 1₁₃.

In the shown embodiment said first connecting network is a low speed CAN network (or a CAN bus) to which also a remote control 19 can be connected, and on which for example information can be sent from consumers indicating that the DC/DC converter needs to be activated or that they request to be supplied.

The CAN bus may be driven by the 48V system (here) which in some embodiments is provided by the building of a specially adapted circuit. Alternatively the CAN bus can be driven separately, in that case, however, it has to support the higher, by the voltage converter, up-converted voltage. In some embodiments the CAN bus uses the lower input voltage (for example 12V). The CAN cable may for example be run on 5V in the CAN circuit.

From the control unit 12 of the arrangement for voltage conversion, information can be sent indicating that power as requested by a consumer can be delivered or that only a lower supply power capacity is available etc. Communication can take place between a remote control 19 with a transmitting and a receiving functionality by means of which hence also a consumer can request to be supplied etc. as described above. Control buttons on the control panel 14 or similar may alternative be used for the transmission of a request.

Alternatively these functionalities can be provided on respective consumers (not shown here) or be provided, in addition to on one or more consumers, also by means of a remote control and/or a control panel with control buttons. Particularly may, with an activation signal, power be reserved for a consumer, particularly the power that the consumer requires for operation.

The control funtion 12 is adapted to control the voltage converter 11 in order to admit supply of one or more consumers requesting to be supplied depending on available supplying capacity and fulfilment of given criteria.

In an appropriate manner the control function 12 continuously (or at discrete points in time, or on request) collects information about available capacity of the voltage converter and holds such information in information holding means 18. It may also be provided with such information in other manners.

Criteria may be given in different manners according to different embodiments. In a very simple embodiment may for example consumers be supplied in order, i.e. the consumer that first requests to be supplied will be supplied first, and if then further consumers need to be supplied, they are supplied depending on remaining capacity, or alternatively the available power is shared between them. According to another implementation previous consumers are disconnected, or are admitted power after the last requesting consumer has been admitted the power it needs, or the power is shared between them.

Preferably there is a possibility to, for example, via control panel 14 or via remote control 19, or by means of a direct control command using a button or similar on a consumer, give such a consumer priority and then terminate, or at lest reduce, the power supply of other consumers, since this consumer, at the actual moment in time, is a prioritized consumer which definitely has to be supplied.

In other embodiments the criteria comprise prioritizing information for different consumers and the prioritizing information can be held in holding means 17 which either may be comprised in the control unit or which may communicate therewith.

The priorities, and the criteria, may either be fixed or dynamical, i.e. variable. It is also possible to add and to remove consumers and to give them a certain individual priority according to different priority classes etc. In the prioritizing information may also be included or held information regarding to which extent, or if, power supply sharing shall be applied, so that it for example may be indicated whether power sharing should be applied if not sufficient power is available when a consumer requests to be supplied and if only a fraction of the requested power is available, and if and how in such a case the available capacity is to be shared between different consumers, about which consumers allow sharing etc.

The prioritizing and the allocation of power admitted to be supplied to different consumers can be controlled in many different manners, ranging from exclusively manually to automatically, mechanical control or computer controlled.

In some embodiments temporary changes are allowed, for example up or down prioritizing of a consumer, which for example shall be possible to invoke by means of a quick command on the voltage converter, on the consumer, using the remote control or the control panel, or using one or more thereof.

Consumers can be added, replaced, removed, and, manually or automatically, be given different priorities.

In an advantageous embodiment consumers are given an identity when mounted, upon installation. This can be done in different manners, for example by means of a login procedure in which consumers are given an identity. For example may, for activation, at mounting, an activation button which is connected to a consumer or to a user be used. Upon activation of the activation button, a request is sent to (the user and) the DC/DC converter, or only to the user, who then has to send a message to the DC/DC converter over the communication network.

Mounting and start-up may for example take place in such a manner that, first all components, consumers, are mounted, a cable is drawn, current is switched on, queries are sent out to all mounted consumers, which thereupon are to return a response. Then they are given a name or an identity. In advantageous embodiments the voltage converter is provided with a display and a user interface.

If instead of a CAN bus a wireless communication network is used, this procedure may be carried out in a similar manner. If instead discrete cables are used in a communication network may for example so called jumper cables and micro switches with for example a five position code or any other appropriate code be used.

By implementing prioritizing, a smaller voltage can be used than if a voltage converter is used which allows all consumers to be connected at the same time, which is advantageous.

Priorities of consumers may in some more advanced embodiments be programmed, for example in connection with the mounting as described above.

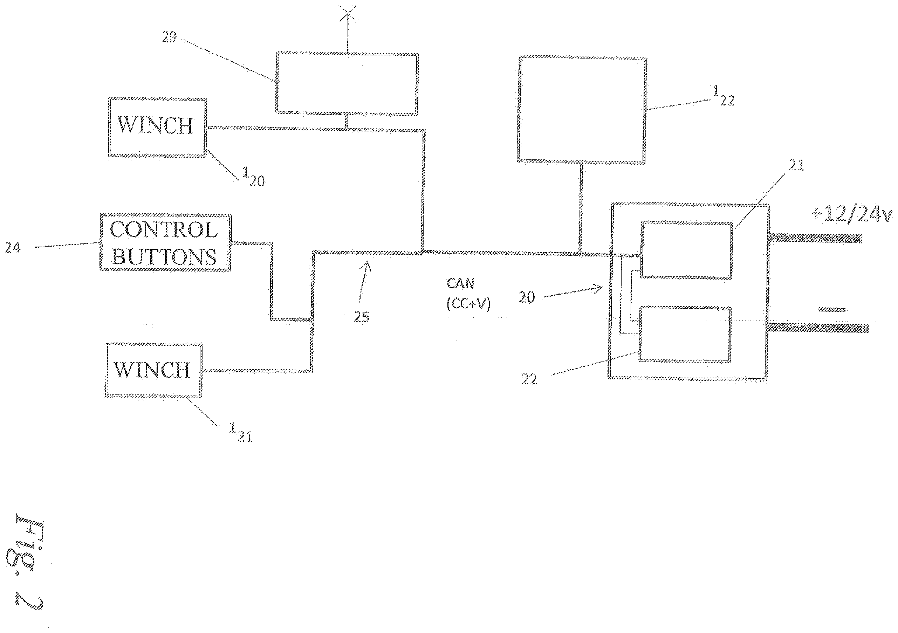

Fig. 2 shows an alternative embodiment comprising an arrangement for voltage conversion 20 with a voltage converter 21 for supply of consumers 1₂₀, 1₂₁, 1₂₂, wherein 1₂₂ is taken to denote other consumers. The control unit 22 here comprises information collecting or information holding means adapted to hold information about remaining available capacity, and storing means adapted to hold information about criteria, particularly prioritizing information, as described above.

The main difference between this embodiment and the embodiment described above according to Fig. 1 is that, herein, for the CAN bus, the first connecting means 25 are used and, for communication (CC) with the control unit as well as for power supply (V) a common, combined network is used. In this embodiment are also shown the remote control 29 and a control panel 24. In other aspects the arrangement functions as described above and can be varied in similar manners.

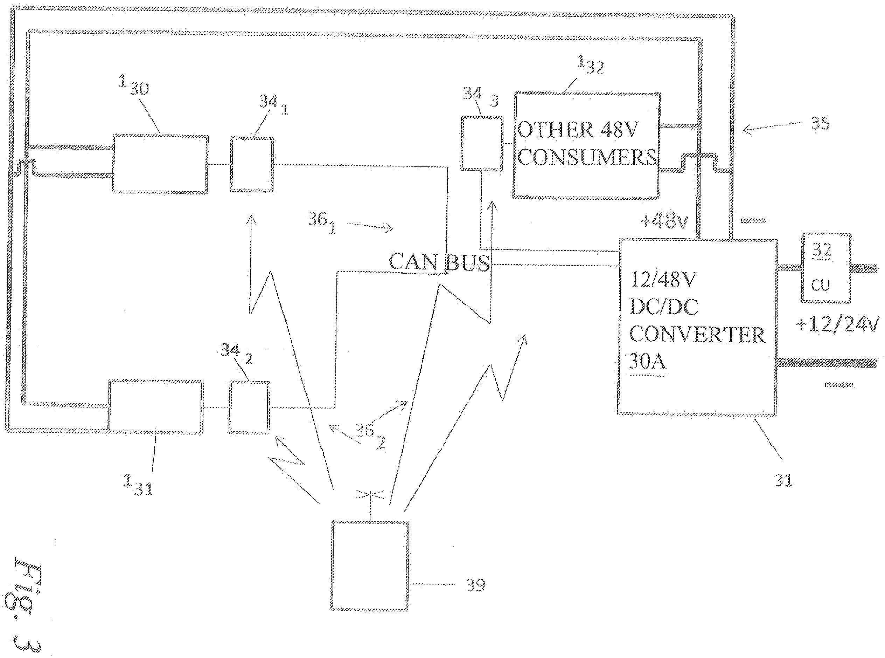

Fig. 3 shows still another embodiment of an arrangement for voltage conversion 31, here with a separate control unit 32, connected to, or comprising, information holding means and storing means (not shown) for holding information about current supply capacity and prioritizing information respectively (and identity information concerning consumers). The control unit is here connected at the feeding voltage input from the battery.

The arrangement for voltage conversion is via supply connection 35 connected to consumers 1₃₀, 1₃₁, 1₃₂ (1₃₂ schematically referring to other 48V consumers) for power supply as described above, and the consumers are provided with respective control means, for example control buttons or similar 34₁, 34₂, 34₃. Control means comprising control buttons are of course not indispensable, but some consumers may be equipped therewith. Such control means may for example be provided in association with a consumer. Alternatively one or more consumers may be controllable exclusively, or as a complement, by means of a remote control 39. It is here indicated that the remote control 39 is capable of controlling all consumers, or their control means, but of course the case may be that only one or some of the consumers is/are controlled by means of a remote control, or alternatively that none can be.

Communication with the control unit 32 may in some embodiments be provided by means of an interconnecting network 36₁ which in the shown embodiment comprises discrete cables which are connected to respective consumers, or their separate control means. Using discrete cables, identity as well as prioritizing information, is then directly be provided to the control unit 32, which for example may be equipped with contact means for certain consumers or for a certain priority in a simple embodiment.

Of course may also in this case, in which discrete communication cables are used, collection of control information take place by means of direct indication or feeding the control unit, or be programmed in the control unit if it is a more advanced control unit.

In simplier embodiments may, independently of location and possible implementation of the control unit, discrete cables from respective consumers be located on different connector pins on an input to the arrangement/control unit, for example in such a manner that different connectr pins are used for different priorities. Alternatively identity and/or priority can be programmed at connection of a respective cable from a consumer. Also in this embodiment a wireless communication network 36₂ is used as a complement to the discrete communication network 36₁, or can be used for certain consumers which support wireless communication.

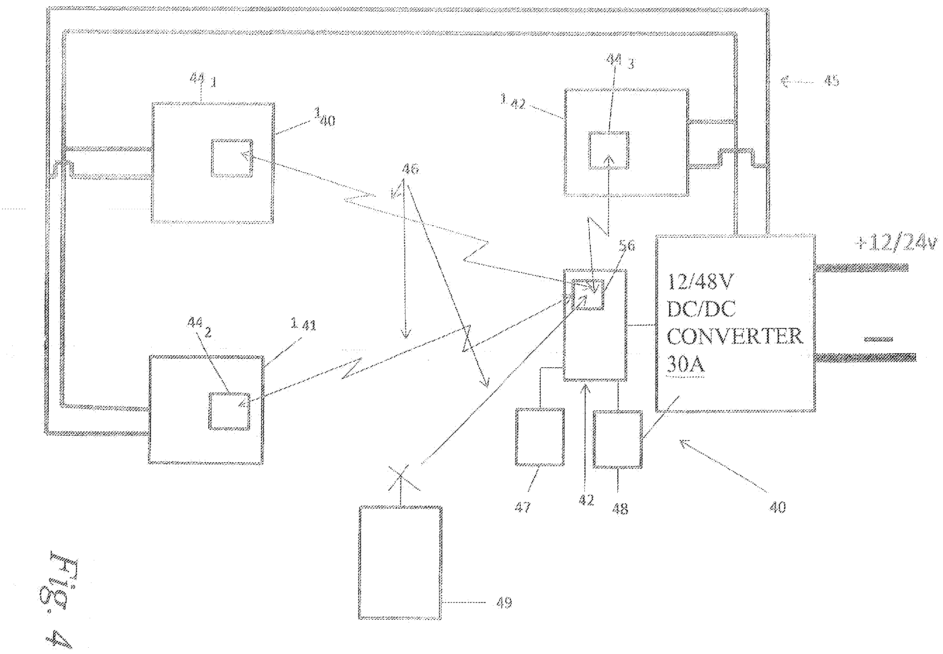

In Fig. 4 is shown a further example of an arrangement for voltage conversion 40 which comprises a voltage converter 41, which by means of a second interconnecting means 45 can supply a number of consumers 1₄₀, 1₄₁, 1₄₂, which here are provided with communication units 44₁, 44₂, 44₃ which enable wireless communication with a control unit 42, i.e. in this embodiment the first communictation means for communication exclusively is made up of a wireless network 46. The control unit here also comprises a module 56 for wireless communication, information holding means 47, and priority information storing means 48 as described above.

It should be clear that in all embodiments the voltage converter may comprise a unit comprising all required functionalities concerning storing of information, handling of information etc. For illustrative reasons, however, the control unit is only shown as being arranged separately from the voltage converter, which however also relates to an advantageous embodiment.

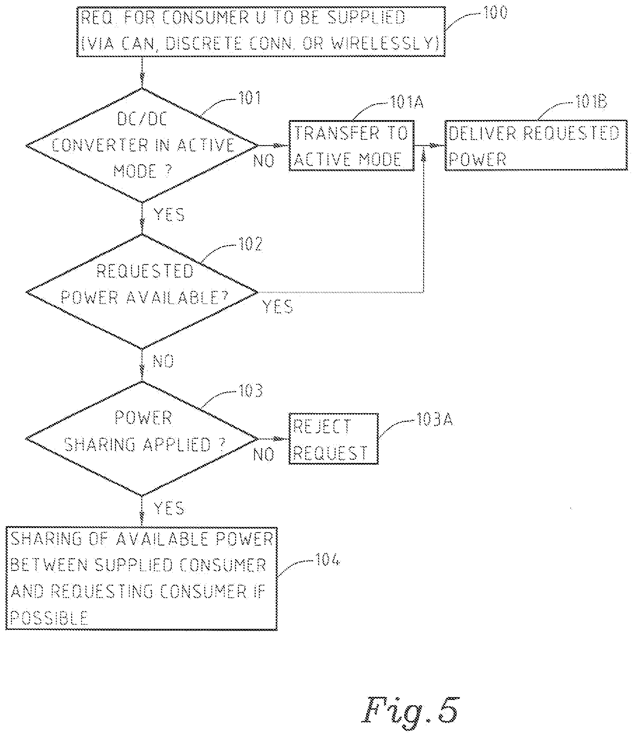

Fig. 5 is a schematical flow diagram describing the procedure when a consumer U sends a request to be supplied, 100. This request can be sent over CAN, over a discrete connection, or a consumer simply is connected, or a user activates a button, by manual programming the control unit, or wirelessly by the user using a remote control. The request is sent to/processed in the control unit which examines if the DC/DC converter is in an active mode or not, 101. This can take place in different manners, for example by checking if the other, higher, voltage is on the feeding cable from the voltage converter.

If it is not in an active mode, the control unit transfers it to an active mode, 101A, for example by activating a switch or on a chip. Then the consumer is admitted to take out the requested power 101B, i.e. information is sent to consumer U that it is admitted the requested power (current) on condition that it is available, which it however is expected to be since the DC/DC converter was in a passive mode.

If on the other hand the DC/DC converter was found to be in an active mode, it may be examined if the requested amount of power is available, 102, by comparing requested amount of power with updated information concerning currently available power held in information holding means. If the requested amount of power is available, it is delivered, i.e. the request is admitted, 101B. If the requested power, however, is not available from the DC/DC converter, it is examined if power sharing is applied, 103 (either generally or if it is to be applied in the current case and/or for the requesting consumer). If not, the request is rejected and information thereon is sent on CAN to consumer U, 103A.
If on the other hand power sharing is applied, available power is shared between already supplied consumer and requesting consumer, if this is possible, 104. This can be done in different manners, either the power (current) is shared or, in information holding means information is held about how much power should be guaranteed a certain consumer, or, if the consumers belong to different priority classes, how available supply capacity in such a case is to be distributed between the consumers. This can be done in many different manners depending on which information actually is held. In a simple case the requesting consumer simply is admitted the remaining power output.

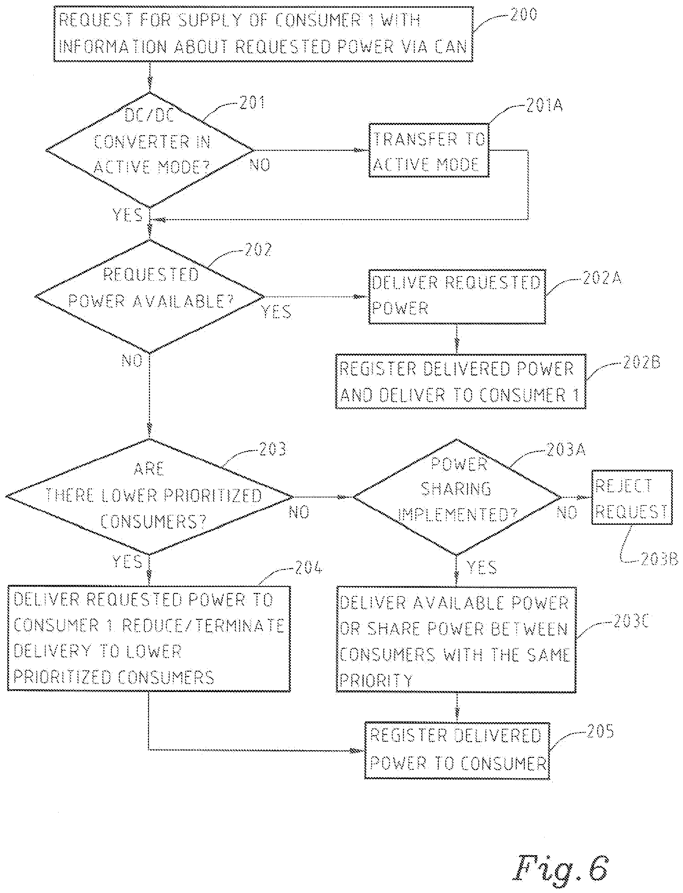

Fig. 6 is a flow diagram illustrating an alternative embodiment according to the invention and it shows an example on how prioritizing information can be held and used. It is assumed that the request for supply of consumer 1 is sent on a CAN bus, wherein the request contains information about the requested power output, 200. Then it is examined if the DC/DC converter is in an active mode, 201, and if not, it is transferred to active mode, 201A, as described with reference to Fig. 5, and it is examined if the requested power output is available, 202. If the requested power output actually is available, the requested power output is delivered (supply admitted) 202A, information thereon is sent on CAN to the consumer and registered in information holding means in or in connection to a control unit arranged in, or connected to, the voltage converter; either that consumer 1 was admitted the power output 202B, or in a simplified embodiment, that a certain power output was delivered to a consumer.

If, on the other hand, the requested power is not available, it is examined in communication with storing means holding prioritizing information if there are other consumers which have a lower priority and which currently are being supplied, 203. If it is then established that there are no other lower prioritized consumers being supplied, it is examined if power sharing is applied, 203A; if not, the request is rejected 203B, and information thereon is sent on CAN to consumer 1.

If, however, power sharing is applied, either available power is delivered or the power is shared between consumers having the same priority, or in any other manner, according to given prioritizing information, 203C. Then it is registered what power was delivered to consumer 1. If, on the other hand, it is determined that there are lower prioritized consumers which currently are being supplied, requested power is delivered (request admitted) to consumer 1 whereas the power supply of lower prioritized consumers either is terminated or reduced to the required extent, 204, and it is registered which consumer is delivered what power (or current).

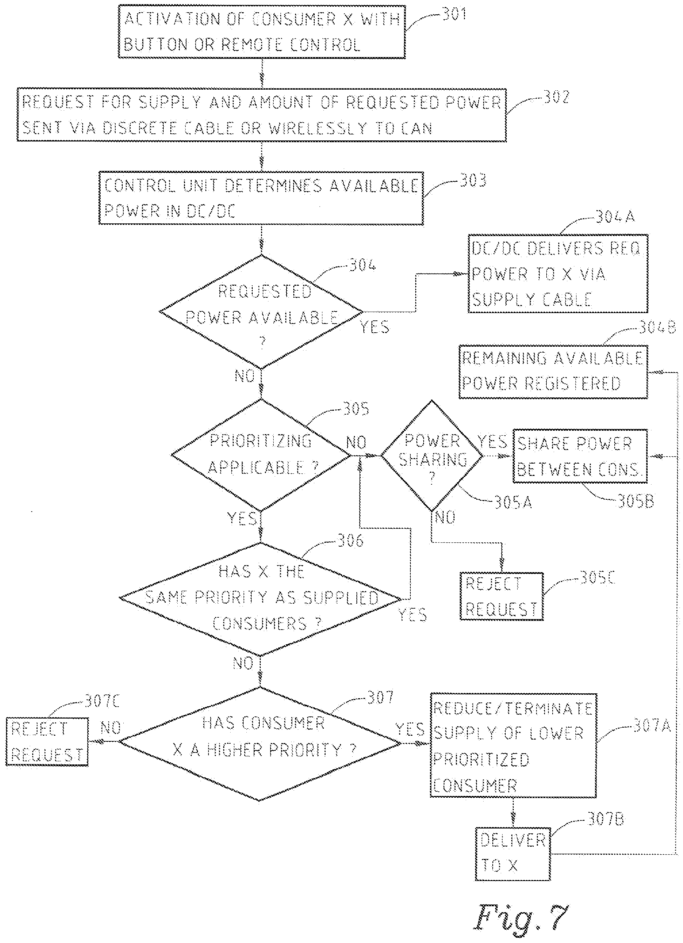

In Fig. 7 still another alternative embodiment according to the invention is shown. It is here supposed that a consumer X is activated via a control button or similar, which either may be provided on the consumer itself or on the control panel, stand-alone or in connection to the voltage converter or its control unit, or via a remote control, 301. A request for power output including information about requested power (current) is either sent over a discrete cable or wirelessly to the control unit CU of the arrangement for voltage conversion, 302. The control unit determines or fetches information about available power in the DC/DC converter, 303. If the requested power is available, 304, consumer X is admitted the requested power output from the DC/DC converter via the supply network 304A, i.e. consumer X is informed that a given power output or a desired power output is admitted. Then information about available remaining power is registered in information holding means 304B. If however the requested power is not available, it is examined if prioritizing is applied, 305. If prioritizing is not applied, it is examined whether power sharing is applied, 305A. If this is not the case, the request is rejected, 305C, i.e. consumer X is not admitted any power supply and consumer X is directly or indirectly informed theron.

If, however, it is established that prioritizing is applied, it is examined if consumer X has the same priority as one or more already supplied consumers. If yes, it is examined if power sharing is implemented, 305A, or if other criteria are applicable, for example if the first requested consumer should be admitted supply or if a later, or the latest requesting consumer instead should be admitted for power supply etc. Many alternatives are possible. If, however, there is no other consumer having the same priority, it is examined if consumer X has a higher priority, 307. If not, the request is rejected, i.e. consumer X is not admitted for power supply 307. If consumer X however has a higher priority, the supply of lower prioritized consumers 307A is reduced or terminated, and consumer X is admitted for power supply, 307B, which is registered, 304B.

The arrangement is intended for use on a boat, particularly a leisure boat, where the requirements on power being available for supply are high, for example for a longer sailing trip, when it can be disastrous if, for important consumers, there is no power available. Particularly leisure boats are often used during a longer period of time but not as frequently as for example a car, and they are used in a very exposed, corrosive environment due to humidity and salt water. Therefore the voltage converter may with advantage be arranged inboards or be enclosed, and in such a manner that as many components as possible, for example contacts and contact points for example between cables are well protected. If, and when, that is not possible, preferably Au (gold) plated contacts are used.

## Claims

1. Arrangement for voltage conversion (10;20;30;40) comprising a voltage converter (11;21;31;41) for conversion of a first voltage to a second, higher, voltage, wherein said first voltage is a DC voltage provided from a low voltage source, a 12 or 24 V battery, and wherein said second voltage is a voltage for supplying a number of, one or more, consumers (1_{10,} 1_{11,} 1_{12,} 1₁₃; 1₂₀-1₂₂; 1₃₀-1₃₂; 1₄₀-1₄₂) with power, and interconnecting means (15,16;25;35,36₁,36₂;45,46) for interconnecting the arrangement for voltage conversion and one or more consumers,
**characterized in**
**that** it is adaped to be arranged on a boat, for example a leisure boat, that it is adapted to communicate with and supply a number of consumers comprising at least one or more of a winch, a jib furler, a furling mast, an anchor windlass, a bow thruster, and in that it comprises or is connected to a control function (12;22;32;42), that the control function is adapted to be able to transfer the voltage converter between a first passive mode, which is an idle mode in which substantially no current is consumed, and an active mode, in which it is capable of supplying one or more of said consumers with power, and vice versa, between an active mode and a passive mode, in that said second voltage is a DC voltage of at least 24V and lower than an applicable limit for it to be a high voltage, below 50V or 60V, preferably 48V, and in that the control function (12;22;32;42) is adapted to transfer the voltage converter (11;21;31;41) from the active to the passive mode if no consumer has an outstanding request to be supplied, or if no consumer has consumed any current during a given time period.

2. Arrangement for voltage conversion according to claim 1,
**characterized in**
**that** the control function (12;22;32;42) is adapted to control the voltage converter (11;21;31;41) to supply one or more consumers (1₁₀,1₁₁,1₁₂,1₁₃;1₂₀-1₂₃;1₄₀-1₄₃) with power depending on fulfilment of given criteria, and that the control function (12;22;32;42) is adapted to transfer the voltage converter from the passive to the active mode if it is in a passive mode upon registration of one or more consumers needing to be supplied.

3. Arrangement for voltage conversion according to claim 2,
**characterized in**
**that** said criteria comprise prioritizing information, and that means are provided through which consumers can be given a certain priority, before connection or at connection of a consumer, said criteria comprising priority indications for consumers, and in that these priority indications are fixed or, preferably, can be varied, or that the criteria comprise supply being admitted for requests in turn of order depending on available supply capacity.

4. Arrangemenet for voltage conversion according to claim 3,
**characterized in**
**that** one or more consumers are provided with, or communicate with, control means (14;24;34₁-34₄) or on/off switches or with receiving means (44₁-44₃) for reception of a remote control signal, indicating at least switching on/switching off of a consumer.

5. Arrangement for voltage conversion according to any one of the preceding claims,
**characterized in**
**that** the control function (12;22;32;42) is adapted to control transfer of the voltage converter (11;21;31;41) from the passive mode to the active mode upon registration of a consumer or upon reception of a request to be supplied by a consumer if the voltage converter is in a passive mode, and that upon fulfilment of given criteria, for example prioritizing criteria, and of available supply capacity, for example available current, the voltage converter is adapted to supply a requesting consumer, by means of said second voltage, and that the control function is adapted to have access to, in second information holding means (17;27;37;47) held information, or itself keep information, about consumer identity and prioritizing information, so that consumers are supplied with power depending on available supply capacity and fulfilment of given criteria, and in that if a consumer having a higher priority requests to be supplied, the control function is adapted to interrupt or reduce the supply of a lower prioritized consumer if there is not capacity enough for both or all consumers requesting to be supplied, or, if several consumers have the same priority, assure that available power is shared between consumers having the same priority.

6. Arrangement for voltage conversion according to any one of the preceding claims,
**characterized in**
**that** the control function comprises interactive means (17A) which upon activation, at least temporarily, for a given request from a consumer to be supplied, can admit said consumer a certain priority, or set aside given criteria so that said requesting consumer is admitted to be supplied, and make the supply of other consumers be interrupted or reduced.

7. Arrangement for voltage conversion according to any one of the preceding claims,
**characterized in**
**that** the control function is arranged to comprise or communicate with first information holding means (18;28;28;48) adapted to hold information about, from said voltage converter, current, available, power supply capacity, and that the control function comprises or is in communication with said second information holding means (17;27;37;47) which are separate from or integrated with said first information holding means (18;28;38;48), and are adapted to hold prioritizing information or control information defining which consumer or which consumers are to be supplied, to which extent under what circumstances, for example concering available supply capacity of the voltage converter, and other active consumers and/or consumers requesting to be supplied, and information concerning applicability of power supply sharing or not for consumers having the same priority, in said first information holding means (18;28;38;48) electrical or mechanical means being provided which are adapted to register a request to be supplied from a consumer, or activation of a consumer.

8. Arrangement for voltage conversion according to claim 3,
**characterized in**
**that** the prioritizing information comprises an adaptive priority scheme with absolute or relative priority indication concerning at least a number of consumers, and that prioritizing of consumers dynamically can be changed, added, through interaction or automatically, the arrangement being adapted to admit communication and feeding of a non-predetermined number of consumers according to said adaptive priority scheme.

9. Arrangement for voltage conversion according to claim 7 or 8,
**characterized in**
**that** the control function comprises a functionality adapted to admit reservation of power for consumers upon direct or indirect request to be supplied for given consumers, or as a preventive measure.

10. Arrangement for voltage conversion according to any one of claims 8 or 9,
**characterized in**
**that** the priority scheme comprises information about priority of a number of consumers, and that upon request from a higher prioritized consumer, lower prioritized consumers can be disconnected from supply, be delivered a lower current, or be disconnected and registered in a supply requesting waiting mode, or that the priority scheme is adapted to admit handling of consumers in turn of order upon requesting a resource, and that the control function or the control unit is adapted to reserve and allocate a supply resource in the form of current for consumers based on turn of order so that consumers can be admitted current supply depending on available or remaining available power supply capacity of the voltage converter.

11. Arrangement for voltage conversion according to any one of the preceding claims,
**characterized in**
**that** the interconnecting means comprise a first interconnecting network (36₁) comprising discrete cables/wires for communication between the DC/DC converter and one or more consumers or a wireless communication network (36₂;46), for example a WiFi network, provided between the control unit and consumers, and a second interconnecting network (15;25;35;45) for current supply of the respective consumers by the voltage converter.

12. Arrangement for voltage conversion according to any one of the preceding claims 1-10,
**characterized in**
**that** the interconnecting means comprises a CAN bus (16;26) for transfer of information concerning at least requests for supply or consumer activation and/or consumer deactivation to the control unit, and e.g. to, upon activation of a control means (14;24;34₁-34₄) of a consumer, or upon activation via a remote control (19;29;39), provide a consumer request to the control function being external to, or included in, the CAN protocol, and for sending control information from the control unit, and a distribution network (15;25) for supplying consumers with current.

13. Arrangement for voltage conversion according to claim 12,
**characterized in**
**that** the CAN bus is implemented using the distribution network (25) .

14. Use of an arrangment for voltage conversion according to any one of the preceding claims in a boat, particularly in a leisure boat, for power supply of consumers comprising at least a winch.

## Patentansprüche

1. Anordnung zur Spannungsumwandlung (10; 20; 30; 40) mit einem Spannungswandler (11; 21; 31; 41) zur Umwandlung einer ersten Spannung in eine zweite, höhere Spannung, wobei die erste Spannung eine Gleichspannung ist, die von einer Niederspannungsquelle, einer 12- oder 24-V-Batterie bereitgestellt wird, und wobei die zweite Spannung eine Spannung zur Versorgung einer Anzahl von, einem oder mehreren Verbrauchern (I₁₀, I₁₁, 1₁₂, I₁₃, I₂₀- I₂₂; I₃₀-I₃₂; I₄₀ - I₄₂) mit Leistung ist, und Verbindungsmittel (15, 16; 25; 35, 36₁, 36₂; 45, 46) zum Verbinden der Anordnung zur Spannungsumwandlung und eines oder mehrerer Verbraucher,
**dadurch gekennzeichnet,**
**dass** es zum Anordnen auf einem Boot, zum Beispiel einem Freizeitboot, ausgebildet ist, dass es zum Kommunizieren mit und Versorgen von einer Anzahl von Verbrauchern ausgebildet ist, die mindestens eine oder mehrere Winden, einen Fockroller, einen Rollmast, eine Ankerwinde, ein Bugstrahlruder umfassen, und dass es eine Steuerungsfunktion (12; 22; 32; 42) umfasst oder mit einer verbunden ist, dass die Steuerungsfunktion zum Übertragen des Spannungswandlers zwischen einem ersten passiven Modus, der ein Leerlaufmodus ist, in dem im Wesentlichen kein Strom verbraucht wird, und einem aktiven Modus, in dem er in der Lage ist, einen oder mehrere der Verbraucher mit Leistung zu versorgen, und umgekehrt, zwischen einem aktiven Modus und einem passiven Modus ausgebildet ist, dass die zweite Spannung eine Gleichspannung von mindestens 24 V und niedriger als ein anwendbarer Grenzwert für eine Hochspannung ist, unter 50 V oder 60 V, vorzugsweise 48, und dass die Steuerungsfunktion (12; 22; 32; 42) zum Übertragen des Spannungswandlers (11; 21; 31; 41) von dem aktiven in den passiven Modus ausgebildet ist, wenn kein Verbraucher eine ausstehende Versorgungsanforderung hat oder wenn kein Verbraucher während eines bestimmten Zeitraums Strom verbraucht hat.

2. Anordnung zur Spannungsumwandlung gemäß Anspruch 1, **dadurch gekennzeichnet,**
**dass** die Steuerungsfunktion (12; 22; 32; 42) zum Steuern des Spannungswandlers (11; 21; 31; 41) ausgebildet ist, um einen oder mehrere Verbraucher (I₁₀, I₁₁, I₁₂, I₁₃, I₂₀ - I₂₃; I₄₀ - I₄₃) abhängig von der Erfüllung bestimmter Kriterien mit Leistung zu versorgen, und dass die Steuerungsfunktion (12; 22; 32; 42) zum Übertragen des Spannungswandlers von dem passiven in den aktiven Modus ausgebildet ist, wenn dieser sich in einem passiven Modus befindet, nachdem ein oder mehrere zu versorgende Verbraucher registriert wurden.

3. Anordnung zur Spannungsumwandlung gemäß Anspruch 2,
**dadurch gekennzeichnet, dass**
dass die Kriterien Priorisierungsinformationen umfassen und dass Mittel vorgesehen sind, durch die den Verbrauchern vor der Verbindung oder bei der Verbindung eines Verbrauchers eine bestimmte Priorität gegeben werden kann, wobei die Kriterien Prioritätsindikationen für Verbraucher umfassen, und dass diese Prioritätsindikationen festgelegt sind oder vorzugsweise variiert werden können, oder dass die Kriterien die Bereitstellung umfassen, die für Anfragen der Reihenfolge nach, die von der verfügbaren Lieferkapazität abhängig ist, ausgebildet ist.

4. Anordnung zur Spannungsumwandlung gemäß Anspruch 3, **dadurch gekennzeichnet,**
**dass** ein oder mehrere Verbraucher über Steuermittel (14; 24 ; 34₁ - 34₄) oder Ein-/Ausschalter oder mit Empfangsmittel (44₁ - 43₃) zum Empfang eines Fernbedienungssignals verfügen oder mit diesen kommunizieren, die zumindest das Ein-/Ausschalten eines Verbrauchers anzeigen.

5. Anordnung zur Spannungsumwandlung gemäß einem der vorhergehenden Ansprüche,
**dadurch gekennzeichnet,**
**dass** die Steuerungsfunktion (12; 22; 32; 42) zum Steuern des Transfers des Spannungswandlers (11; 21; 31; 31; 41) von dem passiven Modus in den aktiven Modus nach Registrierung eines Verbrauchers oder nach Empfang einer Anforderung von einem zu versorgenden Verbraucher ausgebildet ist, wenn sich der Spannungswandler in einem passiven Modus befindet, und dass bei Erfüllung vorgegebener Kriterien, z.B. Priorisierungskriterien, und der verfügbaren Versorgungskapazität, z.B. des verfügbaren Stroms, der Spannungswandler zum Versorgen eines anfordernden Verbrauchers mit der zweiten Spannung ausgebildet ist, und dass die Steuerungsfunktion zum Zugriff auf in zweiten Informationshalteeinrichtungen (17; 27; 37; 47) gehaltene Informationen über die Identität der Verbraucher und die Priorisierungsinformationen oder zum selbst Behalten ausgebildet ist, so dass die Verbraucher in Abhängigkeit von der verfügbaren Versorgungskapazität und der Erfüllung bestimmter Kriterien mit Leistung versorgt werden, und dass, wenn ein Verbraucher mit höherer Priorität die Versorgung anfordert, die Steuerungsfunktion zum Unterbrechen oder Reduzieren der Versorgung eines niedriger priorisierten Verbrauchers ausgebildet ist, wenn die Kapazität nicht für beide oder alle Verbraucher ausreicht, die eine Versorgung anfordern, oder, wenn mehrere Verbraucher die gleiche Priorität aufweisen, sicherzustellen, dass die verfügbare Leistung zwischen Verbrauchern mit gleicher Priorität geteilt wird.

6. Anordnung zur Spannungsumwandlung gemäß einem der vorhergehenden Ansprüche,
**dadurch gekennzeichnet,**
**dass** die Steuerungsfunktion interaktive Mittel (17A) umfasst, die bei Aktivierung, zumindest vorübergehend für eine bestimmte Anforderung eines zu versorgenden Verbrauchers dem Verbraucher eine bestimmte Priorität einräumen oder bestimmte Kriterien festlegen können, so dass der anfordernde Verbraucher zur Versorgung zugelassen wird und die Versorgung anderer Verbraucher unterbrochen oder reduziert wird.

7. Anordnung zur Spannungsumwandlung gemäß einem der vorhergehenden Ansprüche,
**dadurch gekennzeichnet,**
**dass** die Steuerungsfunktion zum Umfassen oder Kommunizieren mit ersten Informationshaltemitteln (18; 28; 28; 48), die zum Halten von Informationen über Strom, Verfügbarkeit, Leistungsversorgungskapazität ausgebildet sind, angeordnet ist, und dass die Steuerungsfunktion mit den zweiten Informationshaltemitteln (17; 27; 37; 47) in Verbindung steht oder umfasst, die von den ersten Informationshaltemitteln (18; 28; 38; 48) getrennt oder integriert sind und zum Halten von Priorisierungsinformationen oder Kontrollinformationen, die definieren, welcher Verbraucher oder welche Verbraucher zu versorgen sind, in welchem Umfang, unter welchen Umständen, zum Beispiel in Bezug auf die verfügbare Versorgungskapazität des Spannungswandlers und anderer aktiver Verbraucher und/oder Verbraucher, die eine Versorgung anfordern und von Informationen über die Anwendbarkeit der gemeinsamen Nutzung der Leistungsversorgung oder nicht für Verbraucher mit der gleichen Priorität, in den ersten Informationshaltemitteln (18 ; 28 ; 38 ; 48) elektrische oder mechanische Mittel zur Verfügung gestellt sind, die zum Registrieren einer Versorgungsanforderung eines Verbrauchers oder der Aktivierung eines Verbrauchers ausgebildet sind.

8. Anordnung zur Spannungsumwandlung gemäß Anspruch 3,
**dadurch gekennzeichnet,**
**dass** die Priorisierungsinformationen ein adaptives Prioritätsschema mit absoluter oder relativer Prioritätsanzeige für mindestens eine Anzahl von Verbrauchern umfassen, und dass die Priorisierung von Verbrauchern dynamisch durch Interaktion geändert oder automatisch hinzugefügt werden kann, wobei die Anordnung zum Ermöglichen der Kommunikation und Zuführung einer nicht vorbestimmten Anzahl von Verbrauchern gemäß dem adaptiven Prioritätsschema ausgebildet ist.

9. Anordnung zur Spannungsumwandlung gemäß Anspruch 7 oder 8, **dadurch gekennzeichnet,**
**dass** die Steuerungsfunktion eine Funktionalität umfasst, die zur Ermöglichung der Reservierung der Leistung für Verbraucher auf direkte oder indirekte Versorgungsanforderung für bestimmte Verbraucher oder als vorbeugende Maßnahme ausgebildet ist.

10. Anordnung zur Spannungsumwandlung nach einem der Ansprüche 8 oder 9, **dadurch gekennzeichnet,**
**dass** das Prioritätsschema Informationen über die Priorität einer Anzahl von Verbrauchern umfasst und dass auf Anfrage eines Verbrauchers mit höherer Priorität niedriger priorisierte Verbraucher von der Versorgung getrennt werden können, ein niedrigerer Strom geliefert wird oder die Verbindung getrennt und in einem versorgungsanforderndern Wartemodus registriert wird, oder dass das Prioritätsschema zum Ermöglichen der Bedienung von Verbrauchern in der Reihenfolge der Anforderung einer Ressource ausgebildet ist, und dass die Steuerungsfunktion oder die Steuereinheit zur Reservierung und Zuweisung einer Versorgungsressource in Form von Strom für Verbraucher basierend auf der Reihenfolge der Anforderung ausgebildet ist, so dass Verbrauchern in Abhängigkeit von der verfügbaren oder verbleibenden verfügbaren Leistungsversorgungskapazität des Spannungswandlers eine Stromversorgung ermöglicht werden kann.

11. Anordnung zur Spannungsumwandlung gemäß einem der vorhergehenden Ansprüche,
**dadurch gekennzeichnet,**
**dass** die Verbindungsmittel ein erstes Verbindungsnetzwerk (36₁) mit diskreten Kabeln/Drähten zur Kommunikation zwischen dem DC/DC-Wandler und einem oder mehreren Verbrauchern oder ein drahtloses Kommunikationsnetzwerk (36₂; 46), beispielsweise ein WiFi-Netzwerk, das zwischen der Steuereinheit und Verbrauchern vorgesehen ist, und ein zweites Verbindungsnetzwerk (15; 25; 35; 45) zur Stromversorgung der entsprechenden Verbraucher durch den Spannungswandler umfassen.

12. Anordnung zur Spannungsumwandlung gemäß einem der vorhergehenden Ansprüche 1-10,
**dadurch gekennzeichnet,**
**dass** die Verbindungsmittel einen CAN-Bus (16; 26) zum Übertragen von Informationen über mindestens Anforderungen zur Versorgung oder Verbraucheraktivierung und/oder Verbraucherdeaktivierung an die Steuereinheit, z.B. um bei Aktivierung der Steuermittel (14; 24; 34₁ - 34₄) eines Verbrauchers oder bei Aktivierung über eine Fernbedienung (19; 29; 39) eine Verbraucheranforderung an die Steuerungsfunktion, die außerhalb des oder in dem CAN-Protokoll enthalten ist, zu stellen und zum Senden von Steuerinformationen von der Steuereinheit, und ein Verteilungsnetzwerk (15; 25) zur Versorgung der Verbraucher mit Strom umfassen.

13. Anordnung zur Spannungsumwandlung gemäß Anspruch 12,
**dadurch gekennzeichnet, dass**
der CAN-Bus mittels des Verteilungsnetzwerks (25) implementiert wird.

14. Verwendung einer Anordnung zur Spannungsumwandlung gemäß einem der vorhergehenden Ansprüche in einem Boot, insbesondere in einem Freizeitboot, zur Leistungsversorgung von Verbrauchern mit mindestens einer Winde.

## Revendications

1. Agencement de conversion de tension (10 ; 20 ; 30 ; 40) comprenant un convertisseur de tension (11 ; 21 ; 31 ; 41) pour convertir une première tension en une seconde tension supérieure, où ladite première tension est une tension CC fournie à partir d'une source basse tension, une batterie 12 ou 24 V, et où ladite seconde tension est une tension destinée à alimenter un certain nombre, un ou plusieurs, de consommateurs (1₁₀, 1₁₁, 1₁₂, 1₁₃ ; 1₂₀-1₂₂ ; 1₃₀-1₃₂ ; 1₄₀-1₄₂) en puissance, et des moyens d'interconnexion (15, 16 ; 25 ; 35, 36₁, 36₂ ; 45, 46) pour interconnecter l'agencement de conversion de tension et un ou plusieurs consommateurs, **caractérisé en ce qu'**il est conçu pour être disposé sur un bateau, pour par exemple un bateau de plaisance, **en ce qu'**il est conçu pour communiquer avec et alimenter un certain nombre de consommateurs comprenant au moins l'un ou plusieurs d'un treuil, d'un enrouleur de foc, d'un mât enrouleur, d'un guindeau à ancre, d'un propulseur d'étrave, et **en ce qu'**il comprend ou est connecté à une fonction de commande (12 ; 22 ; 32 ; 42), la fonction de commande étant conçue pour pouvoir faire passer le convertisseur de tension d'un premier mode passif, qui est un mode inactif, dans lequel quasiment aucun courant n'est consommé, à un mode actif, dans lequel il est capable d'alimenter en puissance un ou plusieurs desdits consommateurs, et inversement, d'un mode actif à un mode passif, **en ce que** ladite seconde tension est une tension CC d'au moins 24 V et inférieure à une limite applicable de sorte qu'elle ne constitue pas une haute tension, en-dessous de 50 V ou 60 V, de préférence 48 V, et **en ce que** la fonction de commande (12 ; 22 ; 32 ; 42) est conçue pour faire passer le convertisseur de tension (11 ; 21 ; 31 ; 41) du mode actif au mode passif si aucun consommateur n'a une demande d'alimentation en attente, ou si aucun consommateur n'a consommé de courant pendant une période donnée.

2. Agencement de conversion de tension selon la revendication 1, **caractérisé en ce que** la fonction de commande (12 ; 22 ; 32 ; 42) est conçue pour commander le convertisseur de tension (11 ; 21 ; 31 ; 41) afin d'alimenter un ou plusieurs consommateurs (1₁₀, 1₁₁, 1₁₂, 113 ; 1₂₀-1₂₂ ; 1₃₀-1₃₂ ; 1₄₀-1₄₂) en puissance en fonction du respect de critères donnés, et **en ce que** la fonction de commande (12 ; 22 ; 32 ; 42) est conçue pour faire passer le convertisseur de tension du mode passif au mode actif s'il est en mode passif lors de l'enregistrement d'un ou de plusieurs consommateurs nécessitant d'être alimentés.

3. Agencement de conversion de tension selon la revendication 2, **caractérisé en ce que** lesdits critères comprennent des informations de prioritisation, et que sont prévus des moyens par lesquels les consommateurs peuvent se voir attribuer une certaine priorité, avant une connexion ou lors d'une connexion d'un consommateur, lesdits critères comprenant des indications de priorité pour les consommateurs, et **en ce que** ces indications de priorité sont fixes ou, de préférence, peuvent être modifiées, ou que les critères comprennent l'allocation d'alimentation pour des demandes dans l'ordre du tour en fonction de la capacité d'alimentation disponible.

4. Agencement de conversion de tension selon la revendication 3, **caractérisé en ce qu'**un ou plusieurs consommateurs sont équipés, ou communiquent, avec des moyens de commande (14 ; 24 ; 34₁-34₄) ou des interrupteurs de marche/arrêt ou de moyens de réception (44₁-44₃) pour la réception d'un signal de commande à distance indiquant au moins la mise en marche/l'arrêt d'un consommateur.

5. Agencement de conversion de tension selon l'une quelconque des revendications précédentes, **caractérisé en ce que** la fonction de commande (12 ; 22 ; 32 ; 42) est conçue pour commander le passage du convertisseur de tension (11 ; 21 ; 31 ; 41) du mode passif au mode actif lors de l'enregistrement d'un consommateur ou lors de la réception d'une demande d'alimentation par un consommateur si le convertisseur de tension est en mode passif, et que lors de la satisfaction de critères donnés, par exemple de critères de prioritisation, et de la capacité d'alimentation disponible, par exemple de courant disponible, le convertisseur de tension est conçu pour alimenter un consommateur en demande, au moyen de ladite seconde tension, et que la fonction de commande est conçue pour, avoir accès à des informations détenues dans des seconds moyens de conservation d'informations (17 ; 27 ; 37 ; 47), ou conserver elle-même des informations, concernant l'identité du consommateur et la prioritisation des informations, de manière à ce que les consommateurs soient alimentés en puissance en fonction de la capacité d'alimentation disponible et du respect de critères donnés, et **en ce que** si un consommateur présentant une priorité supérieure demande d'alimentation, la fonction de commande est conçue pour interrompre ou réduire l'alimentation d'un consommateur moins prioritaire s'il n'y a pas assez de capacité pour les deux ou tous les consommateurs demandant à être alimentés, ou, si plusieurs consommateurs présentent la même priorité, assurer que la puissance disponible est partagée entre des consommateurs présentant la même priorité.

6. Agencement de conversion de tension selon l'une quelconque des revendications précédentes, **caractérisé en ce que** la fonction de commande comprend des moyens interactifs (17A) qui, lors de l'activation, au moins de manière temporaire, pour une demande d'alimentation donnée d'un consommateur, peuvent concéder audit consommateur une certaine priorité, ou mettre de côté des critères donnés de sorte que ledit consommateur en demande soit admis à être alimenté, et que l'alimentation d'autres consommateurs soit interrompue ou réduite.

7. Agencement de conversion de tension selon l'une quelconque des revendications précédentes, **caractérisé en ce que** la fonction de commande est agencée pour comprendre ou communiquer avec des premiers moyens de conservation d'informations (18; 28; 28; 48) conçus pour conserver des informations concernant, à partir dudit convertisseur de tension, le courant disponible, la capacité d'alimentation en puissance, et **en ce que** la fonction de commande comprend ou est en communication avec lesdits seconds moyens de conservation d'informations (17 ; 27 ; 37 ; 47) qui sont séparés desdits ou intégrés auxdits premiers moyens de conservation d'informations (18 ; 28 ; 38 ; 48), et sont conçus pour conserver des informations de prioritisation ou des informations de commande définissant quel consommateur ou quels consommateurs doivent être alimentés, dans quelle mesure et dans quelles circonstances, par exemple en ce qui concerne la capacité d'alimentation disponible du convertisseur de tension, et d'autres consommateurs actifs et/ou des consommateurs demandant à être alimentés, et des informations concernant l'applicabilité ou non du partage d'alimentation en puissance pour les consommateurs présentant la même priorité, des moyens électriques ou mécaniques étant prévus dans lesdits premiers moyens de conservation d'informations (18; 28; 38; 48) et conçus pour enregistrer une demande d'alimentation d'un consommateur, ou une activation d'un consommateur.

8. Agencement de conversion de tension selon la revendication 3, **caractérisé en ce que** les informations de priorité comprennent un schéma de priorité adaptatif avec une indication de priorité absolue ou relative concernant au moins un certain nombre de consommateurs, et **en ce que** la prioritisation des consommateurs peut être, de manière dynamique, modifiée, ajoutée, par interaction ou automatiquement, l'agencement étant conçu pour permettre la communication et l'alimentation d'un nombre non prédéterminé de consommateurs selon ledit schéma de priorité adaptatif.

9. Agencement de conversion de tension selon la revendication 7 ou 8, **caractérisé en ce que** la fonction de commande comprend une fonctionnalité conçue pour permettre une réservation de puissance pour des consommateurs sur demande d'alimentation directe ou indirecte pour des consommateurs donnés, ou à titre de mesure préventive.

10. Agencement de conversion de tension selon l'une quelconque des revendications 8 ou 9, **caractérisé en ce que** le système de priorité comprend des informations concernant la priorité d'un certain nombre de consommateurs, et que sur demande d'un consommateur de priorité supérieure, les consommateurs de priorité inférieure peuvent être déconnectés de l'alimentation, recevoir un courant inférieur, ou être déconnectés et enregistrés dans un mode d'attente de demande d'alimentation, ou **en ce que** le schéma de priorité est conçu pour permettre la gestion des consommateurs dans l'ordre du tour lors de la demande d'une ressource, et que la fonction de commande ou l'unité de commande est conçue pour réserver et allouer une ressource d'alimentation sous forme de courant aux consommateurs en fonction de l'ordre du tour de la commande de la commande afin que de l'alimentation en courant puisse être allouée aux consommateurs en fonction de la capacité d'alimentation en puissance disponible ou restante du convertisseur de tension.

11. Agencement de conversion de tension selon l'une quelconque des revendications précédentes, **caractérisé en ce que** les moyens d'interconnexion comprennent un premier réseau d'interconnexion (36₁) comprenant des câbles/fils discrets pour la communication entre le convertisseur CC/CC et un ou plusieurs consommateurs ou un réseau de communication sans fil (36₂ ; 46), par exemple un réseau WiFi, prévu entre l'unité de commande et les consommateurs, et un second réseau d'interconnexion (15 ; 25 ; 35 ; 45) pour l'alimentation en courant des consommateurs respectifs par le convertisseur de tension.

12. Agencement de conversion de tension selon l'une quelconque des revendications précédentes 1 à 10, **caractérisé en ce que** le moyen d'interconnexion comprend un bus CAN (16 ; 26) pour le transfert d'informations concernant au moins des demandes d'alimentation ou d'activation de consommateur et/ou de désactivation de consommateur à l'unité de commande, et par exemple pour, lors de l'activation d'un moyen de commande à distance (14 ; 24 ; 34₁-34₄) d'un consommateur, ou lors de l'activation via une télécommande (19 ; 29 ; 39), fournir une demande du consommateur à la fonction de commande qu'elle soit externe au, ou incluse dans, le protocole CAN, et pour envoyer des informations de commande provenant de l'unité de commande, et un réseau de distribution (15 ; 25) pour alimenter des consommateurs en courant.

13. Agencement de conversion de tension selon la revendication 12, **caractérisé en ce que** le bus CAN est mis en oeuvre en utilisant le réseau de distribution (25).

14. Utilisation d'un agencement de conversion de tension selon l'une quelconque des revendications précédentes dans un bateau, en particulier dans un bateau de plaisance, pour l'alimentation en puissance de consommateurs comportant au moins un treuil.
